# NEUE EUROPÄISCHE PATENTSCHRIFT

(11) **EP 2 912 340 B2**
(45) Veröffentlichungstag und Bekanntmachung des Hinweises auf die Entscheidung über den Einspruch: **14.04.2021**
(45) Hinweis auf die Patenterteilung: 16.08.2017
(21) Anmeldenummer: 13771126.3
(22) Anmeldetag: 30.09.2013
(51) Int. Cl.: F16F 15/14

(54) **TORSIONSSCHWINGUNGSDÄMPFER**
TORSIONAL VIBRATION DAMPER
AMORTISSEUR DE VIBRATIONS DE TORSION

(30) Priorität: 29.10.2012 DE 102012219737
(43) Veröffentlichungstag der Anmeldung: 02.09.2015
(73) Patentinhaber: ZF Friedrichshafen AG, 88046 Friedrichshafen (DE)
(72) Erfinder: KRAM, Matthias, 97332 Volkach (DE); STAMPF, Volker, 97422 Schweinfurt (DE); SUDAU, Jörg, 97464 Niederwerrn (DE); SASSE, Christoph, 97422 Schweinfurt (DE); STÜRMER, Armin, 97517 Rannungen (DE); WIRACHOWSKI, Michael, 97078 Würzburg (DE); DONG, Ying, 97493 Bergrheinfeld (DE); KOKOTT, Friedrich, 97493 Bergrheinfeld (DE); PITTNER, Daniel, 97218 Gerbrunn (DE); ANDRES, Oliver, 96047 Bamberg (DE); VIERNEUSEL, Simone, 97486 Königsberg-Holzhausen (DE); EGLER, Dennis, 34314 Espenau (DE)
(74) Vertreter: 2SPL Patentanwälte PartG mbB
(86) Internationale Anmeldenummer: PCT/EP2013/070306
(87) Internationale Veröffentlichungsnummer: WO 2014/067728

(56) Entgegenhaltungen:
- EP-A1- 0 972 965
- EP-A1- 1 041 309
- EP-A1- 2 607 743
- EP-A1- 2 719 920
- EP-A2- 0 828 090
- WO-A1-2010/020209
- WO-A1-2010/066218
- WO-A1-2013/156733
- WO-A2-2012/000482
- DE-A1-102009 042 818
- DE-A1-102009 042 818
- DE-A1-102010 029 464
- DE-A1-102011 086 436
- DE-A1-102011 088 049
- DE-A1-102011 100 895
- FR-A1- 2 986 592

## Beschreibung

Die vorliegende Erfindung betrifft einen Torsionsschwingungsdämpfer, der mit einem Tilgermassenträger, an welchem zumindest eine relativ zu demselben bewegbare Tilgermasse aufgenommen ist, sowie mit wenigstens einem Anschlag versehen ist. Die zumindest eine Tilgermasse verfügt über eine Anschlagseite mit einer geometrischen Anformung, wobei der zumindest einen Tilgermasse wenigstens ein Anschlag zugeordnet ist, der mit der zumindest einen Tilgermasse eine zumindest teilweise axiale Überdeckung in Erstreckungsrichtung einer Zentralachse aufweist, und der an seiner der Anschlagseite der Tilgermasse zugewandten Seite über ein Anschlagprofil verfügt, wobei dem wenigstens einen Anschlag für die zumindest eine Tilgermasse wenigstens ein Anschlagaufnehmer zugeordnet ist.

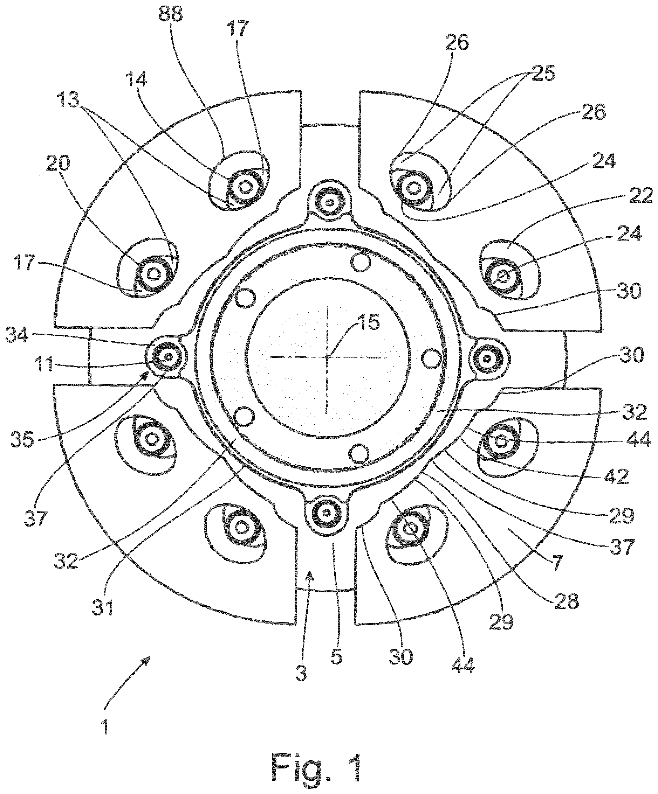

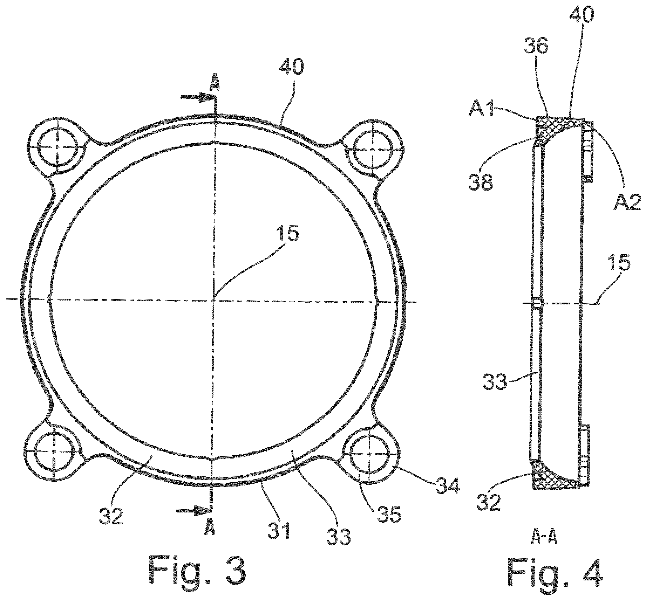

Ein derartiger Torsionsschwingungsdämpfer ist aus der gattungsgemäßen DE 10 2009 042 818 A1 bekannt. Dieser Torsionsschwingungsdämpfer verfügt gemäß Fig. 1 im radial inneren Bereich über ein ringförmiges Bauteil, das an einer abtriebsseitigen Schwungmasse des Torsionsschwingungsdämpfers befestigt ist, und mit Spiel in Umfangsrichtung eine als Tilgermassenträger dienende Nabenscheibe aufnimmt. Die Nabenscheibe dient, wie Fig. 4 im Einzelnen erkennen lässt, zur Aufnahme einer Mehrzahl von in Umfangsrichtung aufeinander folgend angeordneten Tilgermassen, und verfügt hierzu für jede Tilgermasse über zwei Führungsbahnen, die jeweils über einen Rollkörper mit ebenfalls zwei Führungsbahnen der jeweiligen Tilgermasse verbunden sind. Auf diese Weise sind die Tilgermassen jeweils in Umfangsrichtung relativ zur Nabenscheibe verlagerbar, bis sie mit Radialerstreckungen an einem der jeweiligen Bewegungsrichtung zugeordneten elastischen Anschlag in Anlage gelangt sind. Gemäß der Ausführung nach Fig. 1 ist der elastische Anschlag an dem ringförmigen Bauteil vorgesehen.

Während die Tilgermassen im Fahrbetrieb hinreichend geräuscharm arbeiten, wird in Abstellphasen des jeweiligen Antriebs, wie einer Brennkraftmaschine, oder im Fahrzeug-Kriechbetrieb die an der Nabenscheibe wirksame Drehzahl und damit die auf die Tilgermassen einwirkende Fliehkraft rasch absinken. Sobald die Fliehkraft die Gewichtskraft unterschritten hat, fallen die Tilgermassen nach unten, und erzeugen hierbei in ihren Bahnen und/oder an den Anschlägen ein nicht tolerierbares Anschlaggeräusch.

Der Erfindung liegt die Aufgabe zugrunde, einen mit Tilgermassen versehenen Torsionsschwingungsdämpfer derart auszubilden, dass auch in Betriebsphasen , bei denen die auf die Tilgermassen wirksame Fliehkraft die Gewichtskraft unterschreitet, ein Anschlaggeräusch wirksam verhindert werden kann.

Gemäß dem wesentlichen Aspekt der vorliegenden Erfindung wird diese Aufgabe gelöst durch einen Torsionsschwingungsdämpfer mit den Merkmalen des Patentanspruchs 1.

Es wird ein Torsionsschwingungsdämpfer vorgeschlagen, mit einem Tilgermassenträger, an welchem zumindest eine relativ zu demselben bewegbare Tilgermasse aufgenommen ist, sowie mit wenigstens einem Anschlag, wobei die zumindest eine Tilgermasse über eine Anschlagseite mit einer geometrischen Anformung verfügt, und der zumindest einen Tilgermasse jeweils wenigstens ein Anschlag zugeordnet ist, der mit der zumindest einen Tilgermasse eine wenigstens teilweise axiale Überdeckung in Erstreckungsrichtung einer Zentralachse aufweist, wobei der Anschlag an seiner der Anschlagseite der Tilgermasse zugewandten Seite über ein Anschlagprofil verfügt, und dem wenigstens einen Anschlag für die zumindest eine Tilgermasse wenigstens ein Anschlagaufnehmers zugeordnet ist.

Es ist weiter vorgesehen, dass die an der zumindest einen Tilgermasse vorgesehene geometrische Anformung sowohl wenigstens einen zumindest im Wesentlichen in Radialrichtung wirksamen ersten Kontaktbereich als auch wenigstens einen zumindest im Wesentlichen in Tangentialrichtung wirksamen zweiten Kontaktbereich aufweist, von denen der erste Kontaktbereich mit dem Anschlag und der zweite Kontaktbereich mit dem Anschlagaufnehmer in Wirkverbindung versetzbar ist. Der wenigstens eine Anschlag sowie der wenigstens eine Anschlagaufnehmer erstrecken sich zumindest teilweise radial innerhalb der zumindest einen Tilgermasse. Der Anschlag in Zuordnung zum jeweiligen Anschlagaufnehmer ist mit wenigstens einer Halterung versehen, welche den Anschlagaufnehmer umschließt, wobei die wenigstens eine Halterung des Anschlags gegenüber dem zugeordneten Anschlagaufnehmer zur Bildung eines Freiraums mit einem Achsversatz ausgebildet ist.

Mit Vorzug befindet sich - in Umfangsrichtung gesehen - der erste Kontaktbereich der geometrischen Anformung zwischen zwei sich umfangsendseitig anschließenden zweiten Kontaktbereichen der geometrischen Anformung. Der erste Kontaktbereich ist zur Auslegung auf einander entgegengesetzte Wirkrichtungen der zumindest einen Tilgermasse zweiteilig ausgebildet, wobei jede Anformungshälfte bezüglich ihrer Gestaltung an die Gestaltung des entsprechenden Anschlagprofils des zugeordneten Anschlags angepasst ist, wobei sich ein besonders geräuscharmes Anschlagverhalten ergibt, wenn jede Anformungshälfte an ihrer dem Anschlagprofil des Anschlags zugewandten Seite über einen Krümmungsverlauf verfügt, der an einen Krümmungsverlauf des Anschlagprofils des Anschlags angepasst ist.

Vergleichbar stellt sich die Situation bei den zweiten Kontaktbereichen der geometrischen Anformung dar. Die zweiten Kontaktbereiche sind zur Auslegung auf einander entgegengesetzte Wirkrichtungen der zumindest einen Tilgermasse paarweise vorgesehen, wobei jeder der beiden Kontaktbereiche bezüglich seiner Gestaltung an die Gestaltung des entsprechenden Anschlagaufnehmers angepasst ist. Hierzu verfügt jeder der beiden Kontaktbereiche an seiner dem entsprechenden Anschlagaufnehmer zugewandten Seite über einen Krümmungsverlauf, der an einen Krümmungsverlauf dieses Anschlagaufnehmers angepasst ist.

Wenn einer Mehrzahl von Tilgermassen eine Mehrzahl von Anschlägen zugeordnet sein soll, bietet es sich an, wenn die Anschläge in Umfangsrichtung auf einem gemeinsamen, bevorzugt zumindest im Wesentlichen ringförmigen Bauteil aufgenommen sind. In Betriebszuständen, beispielsweise dem Abschalten eines Antriebs, wie einer Brennkraftmaschine, oder einem Kriechbetrieb bei geringer Drehzahl, kann die auf die Tilgermassen einwirkende Fliehkraft unter die Gewichtskraft fallen, so dass die Tilgermassen unter der Wirkung der Gewichtskraft nach unten fallen, bis sie in Führungsbahnen, die sie mit dem Tilgermassenträger verbinden, an der Bewegungsrichtung zugeordneten Führungsbahnenden in Anlage gelangen. Angesichts der Fallrichtung der Tilgermassen bietet es sich an, die Anschläge und die Anschlagaufnehmer wenigstens teilweise radial innerhalb der zumindest einen Tilgermasse anzuordnen. Diejenigen Tilgermassen, die sich radial oberhalb einer Zentralachse befinden, fallen dann mit ihren ersten Kontaktbereichen auf die zugeordneten Anschläge, und mit ihren zweiten Kontaktbereichen auf die zugeordneten Anschlagaufnehmer, während diejenigen Tilgermassen, die sich radial unterhalb der der Zentralachse befinden, aufeinander zu fallen, wobei durch die Wirkung der ersten, ggf. auch der zweiten Kontaktbereiche vermieden wird, dass die aufeinander zuweisenden Umfangsenden der beiden Tilgermassen in Anlage aneinander zu gelangen.

Die Anschlagaufnehmer können gemäß einem ersten Fall an einer Befestigungsstelle, beispielsweise an einem Tilgermassenträger aufgenommen und zumindest im Wesentlichen stiftförmig ausgebildet sein, sie können gemäß einem zweiten Fall aber auch durch Zapfen gebildet sein, die am Anschlag befestigt sind, und in entsprechende Aufnahmen der Befestigungsstelle, beispielsweise am Tilgermassenträger, eingreifen. Im erstgenannten Fall kann die Befestigungsstelle, beispielsweise der Tilgermassenträger, mit zwei zueinander parallel verlaufenden Tilgermassen-Trägerelementen ausgebildet sein, die durch Abstandsstücke auf fester Distanz zueinander gehalten sind, wobei die Abstandsstücke jeweils eine Halterung am Anschlag durchgreifen. Im zweitgenannten Fall ist dagegen die jeweilige Halterung am Anschlag zur Aufnahme des Zapfens versehen, der zum Eingriff in eine Aufnahme an der Befestigungsstelle bestimmt ist.

Alternativ können die Anschlagaufnehmer allerdings auch durch Haltevorsprünge gebildet sein, die jeweils eine zugeordnete Ausnehmung durchgreifen oder in diese eingreifen, um den Anschlag auf diese Weise an einer Befestigungsstelle anzuklipsen. Als Befestigungsstelle sind Bauteile einer Kopplungsanordnung, wie beispielsweise ein Element einer Dämpfungseinrichtung oder eines hydrodynamischen Kreises vorteilhaft.

Die Anschläge können gegenüber den Anschlagaufnehmern schwimmend aufgenommen und damit relativ zu den Anschlagaufnehmern bewegbar sein. Bei schwimmender Aufnahme der Anschläge können diese insbesondere dann, wenn sie an einem ringförmigen Bauteil vorgesehen sind, über eine gesteigerte Nachgiebigkeit und damit über verbesserte Dämpfungseigenschaften verfügen. Dies kann sich vorteilhaft auswirken, wenn die Tilgermassenelemente mit ihren Anschlagseiten in Anlage gelangen.

Die Anschläge können sich, in Ergänzung der Anschlagaufnehmer, an einem Bauteil der Kopplungsanordnung, wie beispielsweise an einem Element des hydrodynamischen Kreises, radial abstützen.

Wenn die Abstandsstücke die jeweilige Halterung am Anschlag durchgreifen, kann dies mit einem Achsversatz zwischen der Achse des jeweiligen Abstandsstückes und der Achse der jeweiligen Halterung erfolgen. Durch diesen Achsversatz entsteht zwischen der Halterung und dem jeweiligen Abstandsstück ein Freiraum, der eine Elastizität am Anschlag begünstigt, indem die durch eine Tilgermasse beaufschlagte Wandung der Halterung sich elastisch in diesen Freiraum hinein erstrecken kann. Interessant ist eine solche Lösung, wenn die Radialanschläge für eine Mehrzahl an Tilgermassen auf einem gemeinsamen, vorzugsweise ringförmigen Bauteil zusammengefasst sind, das sich radial innerhalb der Tilgermassen erstreckt, und wenn der Achsversatz derart angelegt ist, dass die jeweiligen Freiräume in den radial äußeren Bereichen der Halterungen entstehen. Das ringförmige Bauteil ist dann über die radial inneren Bereiche der Halterungen zentriert.

Die Erfindung wird nachfolgend anhand der beiliegenden Figuren detailliert beschrieben. Es zeigt:
Fig. 1 eine Draufsicht auf einen Torsionsschwingungsdämpfer mit Tilgermassen und zugeordnetem Anschlag, wobei die Tilgermassen eine Position einnehmen, die bei die Schwerkraft übersteigender Fliehkraft, aber ohne eingeleitete Torsionsschwingung, erreicht ist;
Fig. 2 wie Fig. 1, aber mit den Tilgermassen in einer Position, die bei unter die Schwerkraft abgesenkter Fliehkraft eingenommen wird;
Fig. 3 den in Fig. 1 oder 2 eingezeichneten Anschlag in separierter Darstellung;
Fig. 4 den Anschlag gemäß der Schnittlinie A - A in Fig. 3;
Fig. 5 eine Herauszeichnung einer der in Fig. 3 erkennbaren Halterungen des Anschlags, mit Radialversatz zwischen der Halterung und einem von derselben umschlossenen Anschlagaufnehmers;
Fig. 6 den Anschlag gemäß Fig. 3 in räumlicher Darstellung mit Halterungen zum Durchgang von Anschlagaufnehmern;
Fig. 7 wie Fig. 6, aber mit Halterungen, an welchen Anschlagaufnehmer befestigt sind;
Fig. 8 eine Darstellung des Torsionsschwingungsdämpfers in einer hydrodynamischen Kopplungsanordnung;
Fig. 9 eine Herauszeichnung einer Dämpfungseinrichtung sowie des Torsionsschwingungsdämpfers aus der in Fig. 8 gezeigten Kopplungsanordnung;
Fig. 10 ein Anschlag mit anderen Anschlagaufnehmern als in den vorangehenden Figuren und mit Radialabstützung des Anschlags an einem Bauteil der Kopplungsanordnung;
Fig. 11 ein Anschlag mit nochmals anderen Anschlagaufnehmern als in Fig. 10 und ohne Radialabstützung des Anschlags an einem Bauteil der Kopplungsanordnung;
Fig. 12 wie Fig. 11, aber mit Radialabstützung des Anschlags an einem Bauteil der Kopplungsanordnung;
Fig. 13 wie Fig. 1, aber mit Führungsbahnen entsprechend dem Stand der Technik für Rollkörper;
Fig. 14 wie Fig. 13, aber mit Führungsbahnen, die sich von denjenigen nach Fig. 13 unterscheiden;
Fig. 15 eine Schnittdarstellung zu einer Ausführung des Torsionsschwingungsdämpfers mit Anschlägen ohne formschlüssige Verbindung zu Anschlagaufnehmern;
Fig. 16 eine Draufsicht aus der Richtung XVI - XVI in Fig. 15;
Fig. 17 wie Fig. 15, aber mit anderer Ausbildung der Anschlagaufnehmer ;
Fig. 18 eine Draufsicht aus der Richtung XVIII - XVIII in Fig. 17;
Fig. 19 wie Fig. 15, mit nochmals anderer Ausbildung der Anschlagaufnehmer;
Fig. 20 eine Herauszeichnung eines ringförmigen Bauteils mit Anschlägen.

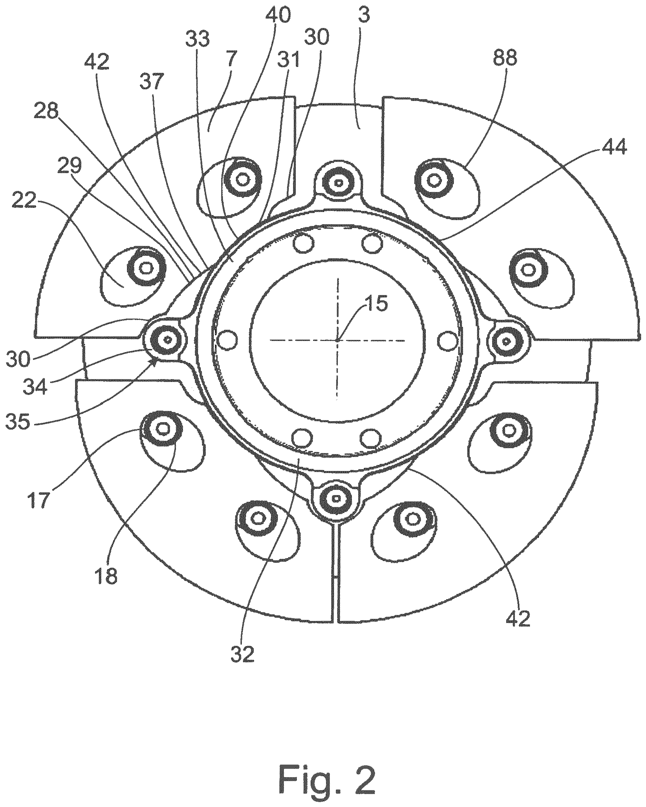

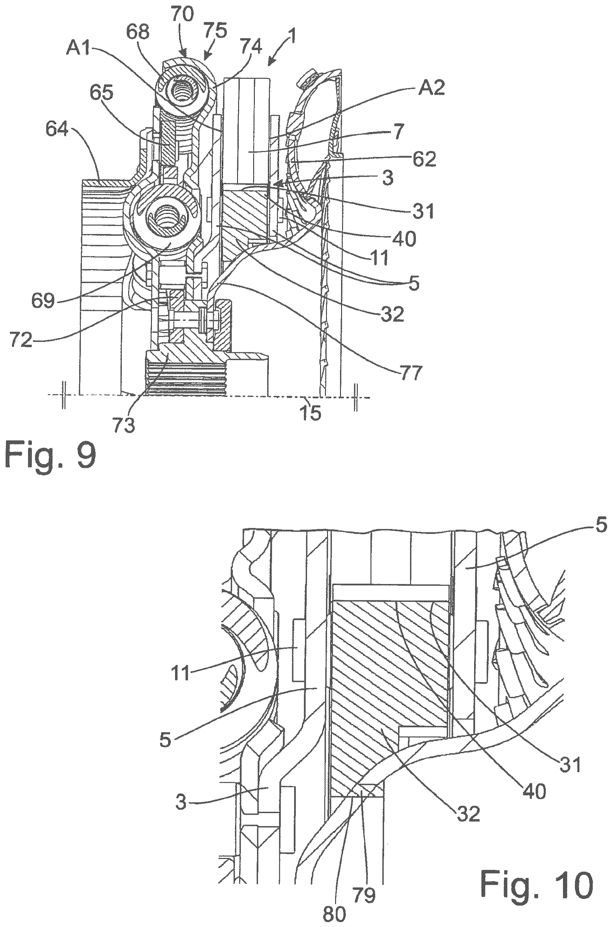

In Fig. 1 ist ein Torsionsschwingungsdämpfer 1 mit einem Tilgermassenträger 3 dargestellt, der zwei mit Axialabstand angeordnete Tilgermassen-Trägerelemente 5 aufweist, von denen zur besseren Darstellbarkeit einer Mehrzahl von am Tilgermassenträger 3 aufgenommenen Tilgermassen 7 lediglich das axial hinter den Tilgermassen 7 angeordnete Tilgermassen-Trägerelement 5 eingezeichnet ist. Die beiden Tilgermassen-Trägerelemente 5 sind durch Abstandsstücke 11 miteinander verbunden. Beide Tilgermassen-Trägerelemente 5 sowie eines der Abstandsstücke 11 sind in Fig. 9 oder 10 erkennbar. Die Tilgermassen 7 sind über Rollkörper 20 innerhalb von Führungsbahnen 22 (vgl. Fig. 2) angeordnet, und zwar derart, dass die Führungsbahnen 22 eine radiale Relativbewegung der Tilgermassen 7 gegenüber den Abstandsstücken 11 ermöglichen. Die Tilgermassen weisen an ihren radialen Innenseiten noch näher zu erläuternde Anschlagseiten 42.

An den Tilgermassen-Trägerelementen 5 sind, jeweils paarweise, Führungsbahnen 13 vorgesehen, die über einen gekrümmten Verlauf verfügen, mit je einem Ausgangsbereich 14, in welchem die jeweilige Führungsbahn 13 den größten Radialabstand von einer Zentralachse 15 aufweist, und mit Anschlussbereichen 17, die sich, einander umfangsmäßig entgegengesetzt erstreckend, an beide Seiten des Ausgangsbereiches 14 anschließen. In Fig. 2 ist ein Umfangsende 18 einer der beiden Anschlussbereiche 17 erkennbar. Selbstverständlich verfügt der andere Anschlussbereich 17 ebenfalls über ein solches Umfangsende, was allerdings in der Zeichnung nicht dargestellt ist.

In den Führungsbahnen 13 ist jeweils einer der Rollkörper 20 angeordnet, der jeweils in eine zugeordnete Führungsbahn 22 der Tilgermassen 7 eingreift, wobei die Führungsbahnen 22 jeweils paarweise in den Tilgermassen 7 angeordnet sind. In der Darstellung gemäß Fig. 1 streben die Tilgermassen 7, bedingt durch die Fliehkraft, nach radial außen, so dass sich die Rollkörper 20 jeweils im Ausgangsbereich 24 der jeweiligen Führungsbahn 22 positionieren, also in demjenigen Bereich, der über den geringsten Radialabstand zur Zentralachse 15 verfügt. Angrenzend an den Ausgangsbereich 24 folgen, sich einander umfangsmäßig entgegengesetzt erstreckend, Anschlussbereiche 25, die in Umfangsrichtung durch jeweils ein Umfangsende 26 begrenzt sind.

Die Tilgermassen 7 weisen jeweils an ihren radial inneren Enden jeweils eine geometrische Anformung 28 auf, die im umfangsseitig mittleren Teil über einen ersten Kontaktbereich 29 verfügt, in den umfangsseitig äußeren Teilen dagegen über zweite Kontaktbereiche 30. Der erste Kontaktbereich 29 verfügt über eine Bereichsmitte 37, welche den ersten Kontaktbereich 29 in Anformunghälften 44 unterteilt. Diese geometrische Anformung 28 wirkt in nachfolgend noch zu beschreibender Weise mit radial innerhalb der Tilgermassen 7 vorgesehenen Anschlägen 31 und Anschlagaufnehmern 35 zusammen, die an einem ringförmigen Bauteil 32 vorgesehen sind.

Das ringförmige Bauteil 32 verfügt in Umfangsrichtung zwischen je zwei Tilgermassen 7 über je eine Halterung 34, die jeweils ein Abstandsstück 11 umschließt, so dass die Halterung 34 jeweils als Anschlagaufnehmer 35 dient. Das ringförmige Bauteil 32 ist demnach drehfest an den Tilgermassen-Trägerelementen 5 und damit am Tilgermassenträger 3 aufgenommen. Ein sich in Umfangsrichtung erstreckender Ringkörper 33 wirkt zwischen je zwei Anschlagaufnehmern 35 jeweils als Anschlag 31. Am ringförmigen Bauteil 32 sind demnach sämtliche Anschläge 31 sowie sämtliche Anschlagaufnehmer 35 zusammengefasst. Alternativ sind allerdings auch nicht dargestellte Lösungen denkbar, bei denen jeder Anschlag 31 oder eine Teilgruppe von Anschlägen 31 über einen Anschlagaufnehmer 35 oder eine Teilgruppe von Anschlagaufnehmern 35 an einem Trägerbauteil, wie dem Tilgermassenträger 3, aufgenommen sind.

Wie die in Fig. 4 gezeigte Querschnittsdarstellung zeigt, verfügt das ringförmige Bauteil 32 über einen Axialflansch 36 und einen sich mit einer Radialkomponente erstreckenden Versteifungsflansch 38. Der Axialflansch 36 weist an seiner radialen Außenseite ein Anschlagprofil 40 auf.

Wenn der Torsionsschwingungsdämpfer 1 mit einer Drehzahl betrieben wird, bei welcher die Fliehkraft die Gewichtskraft übersteigt, streben die Tilgermassen 7 unter der Wirkung der Fliehkraft nach radial außen, so dass sich die Rollkörper 20 jeweils im Ausgangsbereich 24 der jeweiligen Führungsbahn 22 der Tilgermassen 7 positionieren kann. Torsionsschwingungen können zwar Auslenkungen der Tilgermassen 7 in Umfangsrichtung erzwingen, wodurch die Rollkörper 20 aus den Ausgangsbereichen 24 der Führungsbahnen 22 in deren Anschlussbereiche 25 ausgelenkt werden, jedoch erfolgt bei abklingender Torsionsschwingung stets eine Rückstellung der Rollkörper 20 in die Ausgangsposition unter der Wirkung der Fliehkraft.

Fällt die Fliehkraft dagegen unter die Gewichtskraft, beispielsweise bei einem Kriechbetrieb eines Kraftfahrzeuges oder beim Abstellen eines Antriebs, wie beispielsweise einer Brennkraftmaschine, dann fallen die Tilgermassen 7 nach radial innen, um eine in Fig. 2 gezeigte Relativposition zueinander und zum Tilgermassenträger 3 einzunehmen. Bei einem solchen Betriebszustand fallen die beiden sich radial oberhalb der Zentralachse 15 befindlichen Tilgermassen 7 nach radial innen, bis ihre Anschlagseiten 42 mit der für die Bewegungsrichtung relevanten Anformungshälfte 44 des ersten Kontaktbereichs 29 in Anlage an dem zugeordneten Anschlagprofil 40 des Anschlags 31 am Ringkörper 33 des ringförmigen Bauteils 32 gekommen sind. Sollten die Führungsbahnen 22 eine weitere Bewegung der Tilgermassen 7 nach radial unten zulassen, wird diese Bewegung erst dann enden, wenn der für die Bewegungsrichtung relevante zweite Umfangsbereich 30 der jeweiligen Tilgermasse 7 an der Halterung 34 und damit am Anschlagaufnehmer 35 des ringförmigen Bauteils 32 in Anlage gelangt ist. Die beiden sich radial unterhalb der Zentralachse 15 befindlichen Tilgermassen 7 fallen ebenfalls nach radial innen, bis ihre Anschlagseiten 42 mit den daran angeformten, für die Bewegungsrichtung relevanten ersten Kontaktbereichen 29 in Anlage an dem zugeordneten Anschlagprofil 40 des Anschlags 31 am Ringkörper 33 des ringförmigen Bauteils 32 gekommen sind, und bis zudem die für die Bewegungsrichtung relevanten zweiten Kontaktbereiche 30 der jeweiligen Tilgermassen 7 an den entsprechenden Halterungen 34 und damit an den Anschlagaufnehmern 35 des ringförmigen Bauteils 32 in Anlage gelangt sind. Auf diese Weise wird verhindert, dass die beiden sich radial unterhalb der Zentralachse 15 befindlichen Tilgermassen 7 mit ihren Umfangsendkanten in Anlage aneinander gelangen.

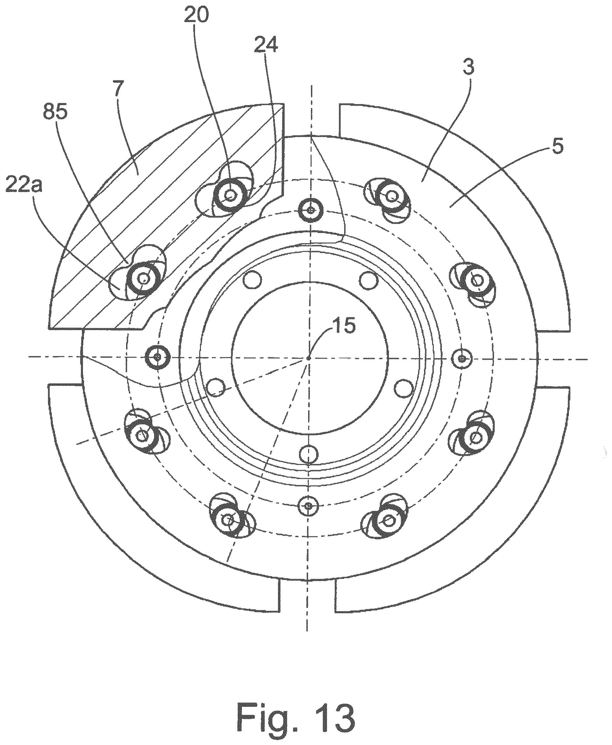

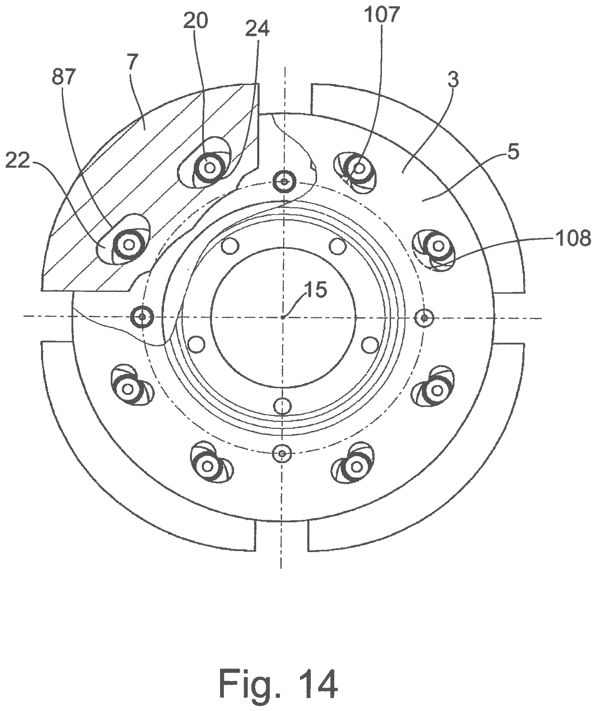

Es gibt eine weitere Maßnahme, um das Auftreffen auf den Anschlag 31 geräuschärmer zu gestalten, wobei diese Maßnahme aus Fig. 1 und 2 bereits hervorgeht, nachfolgend aber unter Bezugnahme auf die Fig. 13 oder 14 erläutert werden soll. Während die in Fig. 13 gezeigten, dem Stand der Technik entsprechenden Führungsbahnen 22a gegenüberliegend zum jeweiligen Ausgangsbereich 24a über eine Einschnürung 85 verfügen, sind die Führungsbahnen 22 an der vergleichbaren Stelle gemäß Fig. 14 zumindest im Wesentlichen mit einer Planausformung 87 ausgebildet, gemäß Fig. 1 oder 2 dagegen sogar mit einer Aufweitung 88 in vom Ausgangsbereich 24 fortweisender Richtung. Die Ausformung der Führungsbahn 22 mit einer Planausformung 87 oder mit einer Aufweitung 88 ist bei einem Wechsel des Betriebszustandes von Vorteil, wenn nämlich durch ein Absinken der Betriebsdrehzahl eine bislang oberhalb der Gewichtskraft liegende Fliehkraft unter die Gewichtskraft fällt. Die Tilgermassen 7 werden dann, wie zu Fig. 2 bereits beschrieben, der Gewichtskraft folgend nach unten fallen. Bei Ausführung der Führungsbahnen 22 gemäß Fig. 14 muss dann der jeweilige Rollkörper 20 über die Einschnürung 85 abrollen, wodurch ein Impuls erzeugt wird, der beim darauf folgenden Fallen der Tilgermassen 7 ein erhebliches Geräusch erzeugt. Durch Ausformung der Führungsbahn 22 mit einer Planausformung 87 oder mit einer Aufweitung 88 können sich die Tilgermassen 7 mittels der jeweiligen Rollkörper 20 entlang der Außenkontur der Führungsbahnen 22 weitgehend frei von einem störenden Impuls entlangbewegen, und treffen daher geräuschärmer auf den zugeordneten Anschlag 31. Ein vergleichbarer Vorteil ergibt sich, wenn die Führungsbahnen 13 in den Tilgermassen-Trägerelementen 5 des Tilgermassenträgers 3 ebenfalls mit einer Planausformung 107 oder einer Aufweitung 108 ausgebildet sind, dort allerdings jeweils an der radial inneren Seite. Die Planausformung 107 ist ebenso wie die Aufweitung 108 jeweils in Fig. 14 mit gestrichelter Linierung angegeben. Selbstverständlich sind bei Realisierung der Planausformung 107 oder der Aufweitung 108 zumindest ein Teil der Führungsbahnen 13 in entsprechender Weise ausgebildet, und nicht nur die in Fig. 14 jeweils gezeigte eine Führungsbahn 13.

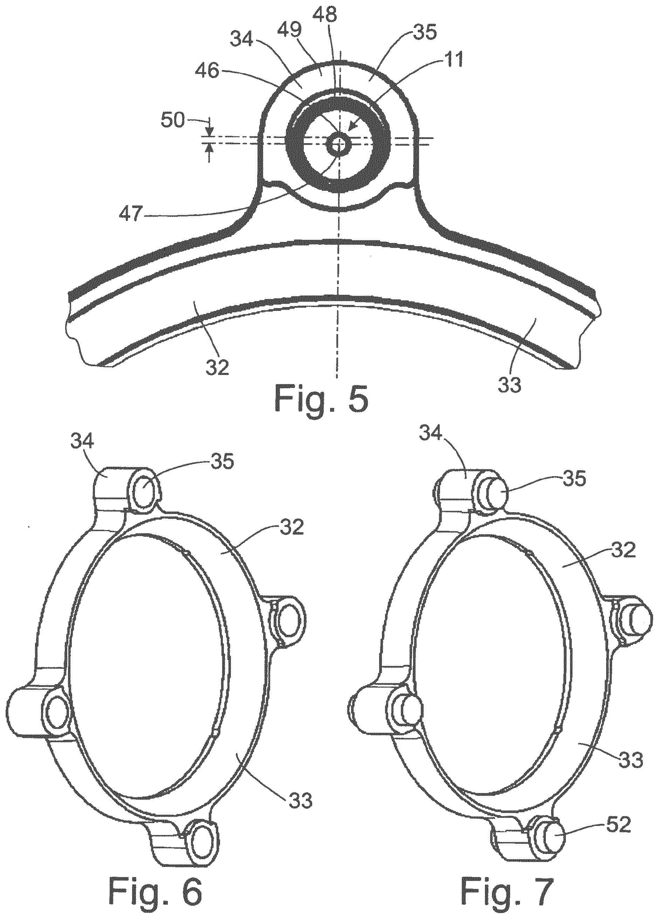

Wie bereits geschildert, kommen bei Betriebszuständen, bei denen die Fliehkraft unter die Gewichtskraft fällt, die zweiten Kontaktbereiche 30 der Tilgermassen 7 an der jeweils zugeordneten Halterung 34 und damit am Anschlagaufnehmer 35 des ringförmigen Bauteils 32 in Anlage. Um dieses Auftreffen der jeweiligen Tilgermasse 7 zu dämpfen, ist die Halterung 34 und damit der Anschlagaufnehmer 35 gemäß Fig. 5 derart ausgebildet, dass seine Mittenachse 46 um einen Achsversatz 50 von der Mittenachse 47 des jeweiligen Anschlagstückes 11 versetzt ist. Die Anschlagstücke 11 sind derart angeordnet, dass sie sich beim Aufsetzen des ringartigen Bauteils 32 im radial inneren Bereich der jeweiligen Halterung 34 befinden. Dadurch entsteht in der Halterung 34 radial außerhalb des jeweiligen Anschlagstückes 11 ein Freiraum 48, der im Rahmen der Elastizität der Wandung 49 der Halterung 34 eine Nachgiebigkeit dieser Wandung 49 ermöglicht.

Während das ringförmige Bauteil 32 gemäß Fig. 6 die bislang beschriebene Ausführung der Anschlagaufnehmer 35 darstellt, nämlich mit zur Aufnahme der Abstandsstücke 11 bestimmter Halterung 34, zeigt Fig. 7 eine Ausführung der Anschlagaufnehmer 35, bei welcher Zapfen 52 in den Halterungen 34 befestigt sind und axial über die Halterungen 34 hinausgreifen, um in entsprechende Ausnehmungen der Tilgermassen-Trägerelemente 5 einzugreifen.

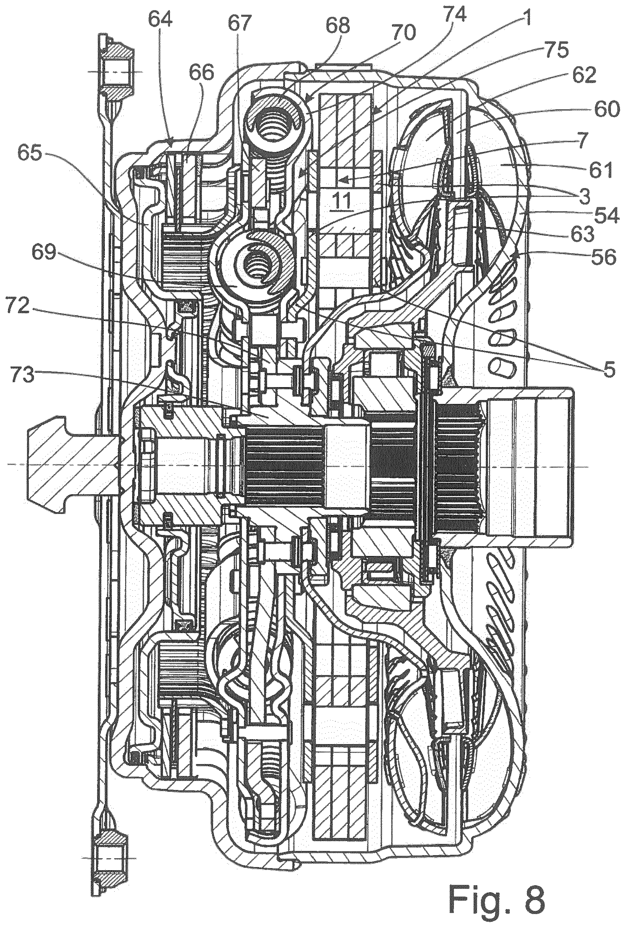

Gemäß Fig. 8 ist der Torsionsschwingungsdämpfer 1 im Gehäuse 54 einer hydrodynamischen Kopplungsanordnung 56 vorgesehen. Diese hydrodynamische Kopplungsanordnung 56 weist einen hydrodynamischen Kreis 60 mit Pumpenrad 61, Turbinenrad 62 und Leitrad 63 auf, sowie eine Kupplungsvorrichtung 64, die über einen Kupplungskolben 65 sowie eine Reibscheibenkupplung 66 verfügt. In Abhängigkeit von der Ansteuerung des Kupplungskolbens 65 ist die Kupplungsvorrichtung 64 zwischen einer Einrückposition und einer Ausrückposition bewegbar. Die Kupplungsvorrichtung 64 ist mit einem Torsionsdämpfereingang 67 einer über zwei Umfangsfedersätze 68, 69 verfügenden Dämpfungseinrichtung 70 verbunden, deren Torsionsdämpferausgang 72 mit einem Abtrieb 73 zusammenwirkt. Zwischen den beiden Umfangsfedersätzen 68, 69 ist ein Torsionsdämpfer-Zwischenbauteil 74 wirksam, an welchem ein Tilgermassen-Trägerelement 5 des Tilgermassenträgers 3 des Torsionsschwingungsdämpfers 1 drehfest aufgenommen ist. Die Dämpfungseinrichtung 70 bildet zusammen mit dem Torsionsschwingungsdämpfer 1 eine Torsionsschwingungs-Dämpfereinheit 75.

Von dem Torsionsschwingungsdämpfer 1 sind in Fig. 8 außer den beiden Trägerelementen 5 des Tilgermassenträgers 3 die dieselben miteinander verbindenden Abstandsstücke 11 sowie die Tilgermassen 7 deutlich erkennbar. Die gleichen Bauteile sind auch in Fig. 9 gezeigt, darüber hinausgehend aber auch das über das Anschlagprofil 40 verfügende und daher als Anschlag 31 wirksame ringförmige Bauteil 32. Wie Fig. 10 deutlich erkennen lässt, befindet sich das ringförmige Bauteil 32 radial innerhalb der Tilgermassen 7, und axial zwischen den Tilgermassen-Trägerelementen 5. Obwohl das ringförmige Bauteil 32 in bereits beschriebener Weise über Abstandsstücke 11 an den Tilgermassen-Trägerelementen 5 aufgenommen ist, stützt es sich mit seiner radialen Innenseite an einer Turbinenradnabe 77 ab, die am Abtrieb 73 befestigt ist.

Bei der Ausführung gemäß Fig. 9 sind zwar Abstandsstücke 11 vorhanden, jedoch übernehmen diese im Hinblick auf das ringförmige Bauteil 32 keine Funktion. Stattdessen stützt sich das ringförmige Bauteil 32 mit seiner radialen Innenseite an der Turbinenradnabe 77 ab, und ist über entlang des Umfangs verteilte Haltevorsprünge 79, die jeweils zugeordnete Ausnehmungen 80 der Turbinenradnabe 77 durchgreifen, an der Turbinenradnabe 79 und damit am Turbinenrad 62 befestigt, indem die Haltevorsprünge 79 an ihren freien Enden Rastnasen 81 aufweisen, mit denen sie die Turbinenradnabe 79 hintergreifen.

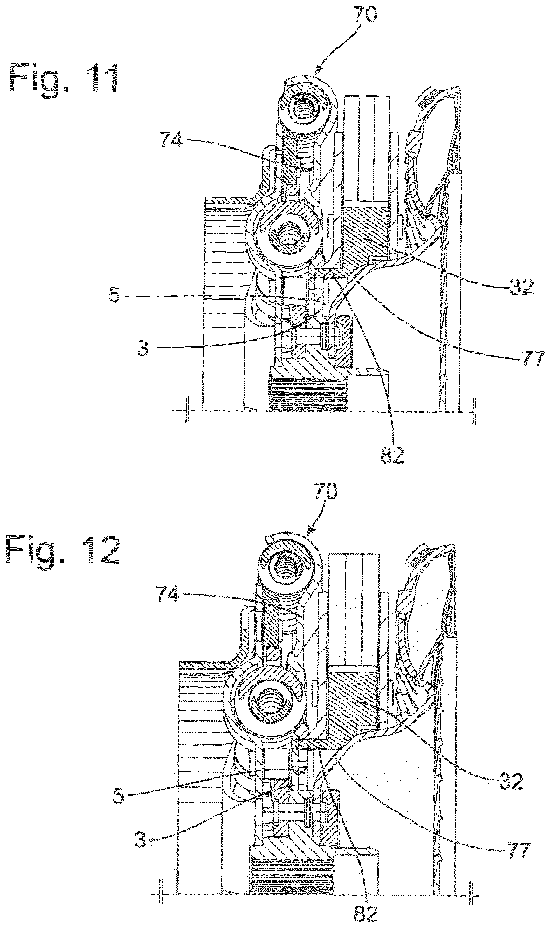

Alternativ kann das ringförmige Bauteil 32 aber auch gemäß Fig. 11 oder 12 am Torsionsdämpfer-Zwischenbauteil 74 der Dämpfungseinrichtung 70 mittels Haltevorsprüngen 82 befestigt sein. Hierzu greifen die Haltevorsprünge 82 in entsprechende Ausnehmungen 83 des zum Torsionsdämpfer-Zwischenbauteil 74 benachbarten Tilgermassen-Trägerelementes 5 in nicht näher dargestellter Weise ein. Das ringförmige Bauteil 32 kann sich hierzu gemäß Fig. 12 mit seiner radialen Innenseite an der Turbinenradnabe 77 abstützen, kann aber auch gemäß Fig. 11 unabhängig von der Turbinenradnabe 77 wirksam sein.

Die Haltevorsprünge 79 oder 82 bilden alternative Ausführungen des Anschlagaufnehmers 35, anstelle von Abstandsstück 11 oder Zapfen 52.

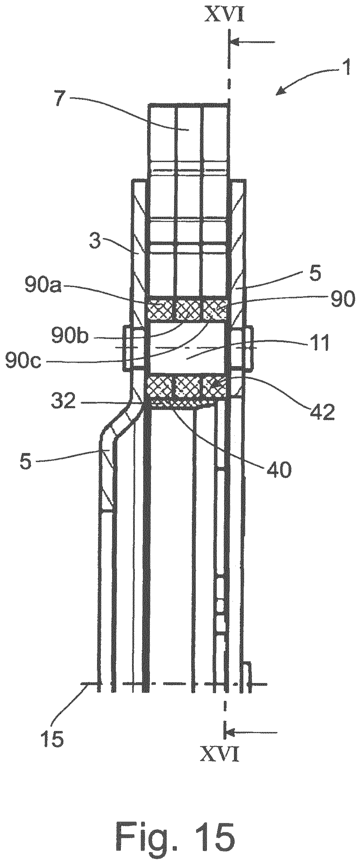

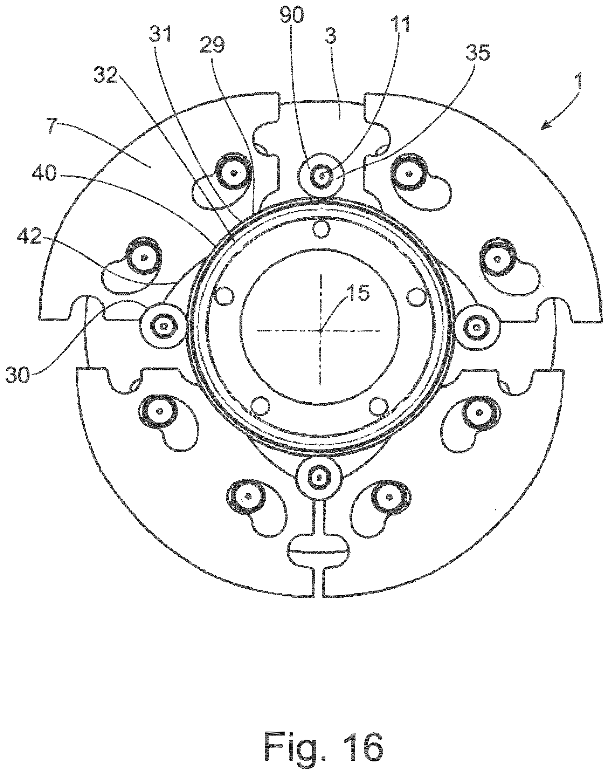

Die in Fig. 15 und 16 gezeigte Ausführung des Torsionsschwingungsdämpfers 1 zeigt wiederum die Abstandsstücke 11 zur Verbindung der Tilgermassen-Trägerelemente 5 der Tilgermassenträger 3. Diese Abstandsstücke 11 sind entweder umkleidet durch eine Mehrzahl ringförmiger Umhüllungen 90a, 90b, 90c, wobei jede ringförmige Umhüllung 90a bis 90c jeweils eine Bereichsabschnitt der jeweiligen Tilgermasse 7 zugeordnet ist, oder aber die Abstandsstücke 11 sind umkleidet durch jeweils eine einzelne buchsenförmige Umhüllung, der die gesamte Tilgermasse 7 in Achsrichtung zugeordnet ist. Mit Vorzug bestehen diese Umhüllungen 90a bis 90c aus Kunststoff, und vermögen so den Anschlag zu dämpfen, wenn der jeweilige zweite Kontaktbereich 30 der Anschlagseite 42 der Tilgermasse 7 in Wirkkontakt mit den Umhüllungen 90a bis 90c der Abstandsstücke 11 gelangen. Darüber hinaus kommt den Abstandsstücken 11 die Aufgabe zu, das ringförmige Bauteil 32 gegenüber der Zentralachse 15 zu zentrieren, so dass auch bei dieser Ausführung an dem ringförmigen Bauteil 32 vorgesehene Anschläge 31 vorhanden sind, an welchen die jeweiligen ersten Kontaktbereiche 29 der Anschlagseiten 42 der Tilgermassen 7 in Betriebszuständen zur Anlage gelangen, bei denen die Fliehkraft unter die Gewichtskraft fällt. Bezogen auf das ringförmige Bauteil 32 wirken auch bei dieser Ausführung die Abstandsstücke 11 als Anschlagaufnehmer 35, jedoch nehmen diese das ringförmige Bauteil 32, abweichend zu den bisherigen Ausführungen, nicht formschlüssig auf. Statt dessen kann das ringförmige Bauteil durch die Anschlagaufnehmer 35 kraftschlüssig gehalten und daher bewegungsgleich mit diesen sein, es kann aber auch, wenn keine kraftschlüssige Verbindung zu den Anschlagaufnehmern 35 besteht, eine Relativbewegung des ringförmigen Bauteils 32 gegenüber den Abstandsstücken 11 und damit gegenüber den Tilgermassen 7 gegeben sein. Bei schwimmender Lagerung des ringförmigen Bauteils 32 gegenüber den Abstandsstücken 11 kann das ringförmige Bauteil 32 über eine gesteigerte Nachgiebigkeit und damit über verbesserte Dämpfungseigenschaften verfügen, wenn die Tilgermassen 7 mit ihren Anschlagseiten 42 in Anlage gelangen.

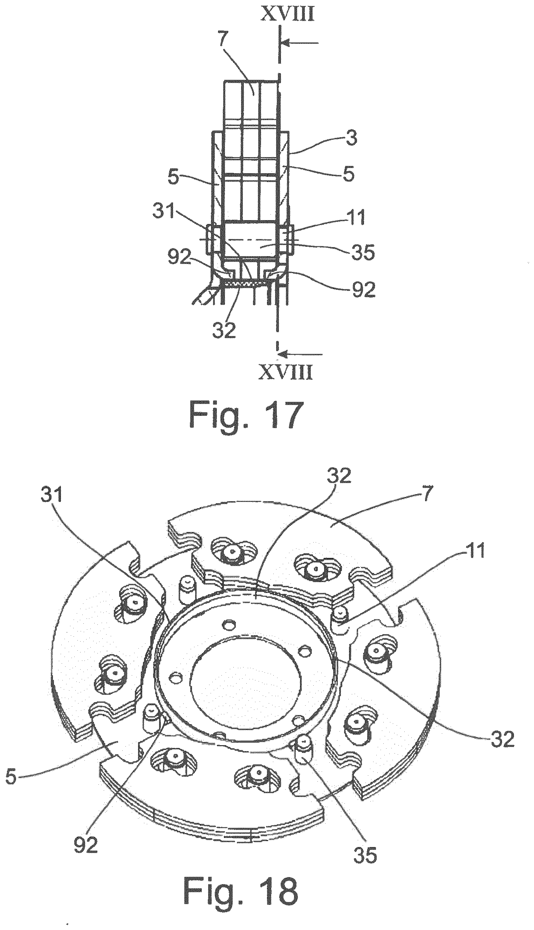

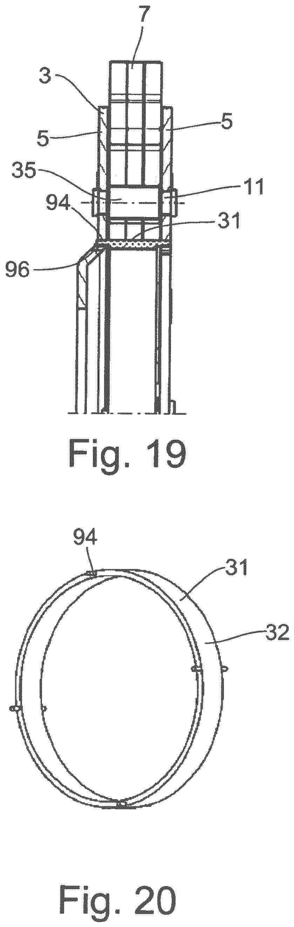

Die Fig. 17 und 18 sowie 19 und 20 zeigen alternative Ausführungen zu den Fig. 15 und 16. Bei den Fig. 17 und 18 sind an den Tilgermassen-Trägerelementen 5 des Tilgermassenträgers 3 bevorzugt im Umfangsbereich der Abstandsstücke 11, aber radial innerhalb derselben, Axialumbiegungen 92 vorhanden, welche anstelle der Abstandsstücke 11 das ringförmige Bauteil 32 zentrierend umgreifen. Bei Fig. 19 und 20 sind an den Tilgermassen-Trägerelementen 5 des Tilgermassenträgers 3, ebenfalls bevorzugt im Umfangsbereich der Abstandsstücke 11, aber radial innerhalb derselben, Axialausnehmungen 96 vorgesehen, in welchen am ringförmigen Bauteil 32 vorgesehene Axialvorsprünge 94 eingreifen. Hier wird das ringförmige Bauteil 32 mittels der Axialvorsprünge 94 zentriert. Die Funktion der Anschlagaufnehmer 35 wird bei den Ausführungen gemäß Fig. 17 bis 20 jeweils durch die Abstandsstücke 11 übernommen.

### Bezugszeichen

- 1: Torsionsschwingungsdämpfer
- 3: Tilgermassenträger
- 5: Tilgermassen-Trägerelemente
- 7: Tilgermassen
- 11: Abstandsstücke
- 13: Führungsbahnen
- 14: Ausgangsbereich
- 15: Zentralachse
- 17: Anschlussbereiche
- 18: Umfangsende
- 20: Rollkörper
- 22: Führungsbahn
- 24: Ausgangsbereich
- 25: Anschlussbereich
- 26: Umfangsende
- 28: geometrische Anformung
- 29: erster Kontaktbereich
- 30: zweiter Kontaktbereich
- 31: Anschlag
- 32: ringförmiges Bauteil
- 33: Ringkörper
- 34: Halterung
- 35: Anschlagaufnehmer
- 36: Axialflansch
- 37: Bereichsmitte
- 38: Versteifungsflansch
- 40: Anschlagprofil
- 42: Anschlagseite
- 44: Anformungshälfte
- 46: Mittenachse
- 47: Mittenachse
- 48: Freiraum
- 49: Wandung
- 50: Achsversatz
- 52: Zapfen
- 54: Gehäuse
- 56: Kopplungsanordnung
- 60: hydrodynamischer Kreis
- 61: Pumpenrad
- 62: Turbinenrad
- 63: Leitrad
- 64: Kupplungsvorrichtung
- 65: Kupplungskolben
- 66: Reibscheibenkupplung
- 67: Torsionsdämpfereingang
- 68: Umfangsfedersatz radial außen
- 69: Umfangsfedersatz radial innen
- 70: Dämpfungseinrichtung
- 72: Torsionsdämpferausgang
- 73: Abtrieb
- 74: Torsionsdämpfer-Zwischenbauteil
- 75: Torsionsschwingungs-Dämpfereinheit
- 77: Turbinenradnabe
- 79: Haltevorsprung
- 80: Ausnehmung
- 81: Rastnase
- 82: Haltevorsprung
- 83: Ausnehmung
- 85: Einschnürung
- 87: Planausformung
- 88: Aufweitung
- 90: Umhüllung
- 92: Axialumbiegung
- 94: Axialvorsprung
- 96: Axialausnehmung
- 107: Planausformung
- 108: Aufweitung

## Patentansprüche

1. Torsionsschwingungsdämpfer (1) mit einem Tilgermassenträger (3), an welchem zumindest eine relativ zu demselben bewegbare Tilgermasse (7) aufgenommen ist, sowie mit wenigstens einem Anschlag (31), wobei die zumindest eine Tilgermasse (7) über eine Anschlagseite (42) mit einer geometrischen Anformung (28) verfügt, wobei der zumindest einen Tilgermasse (7) jeweils wenigstens ein Anschlag (31) zugeordnet ist, der mit der zumindest einen Tilgermasse (7) eine wenigstens teilweise axiale Überdeckung in Erstreckungsrichtung einer Zentralachse (15) aufweist, und der an seiner der Anschlagseite (42) der Tilgermasse (7) zugewandten Seite über ein Anschlagprofil (40) verfügt, wobei dem wenigstens einen Anschlag (31) für die zumindest eine Tilgermasse (7) wenigstens ein Anschlagaufnehmer (35) zugeordnet ist, wobei die an der zumindest einen Tilgermasse (7) vorgesehene geometrischen Anformung (28) sowohl wenigstens einen zumindest im Wesentlichen in Radialrichtung wirksamen ersten Kontaktbereich (29) als auch wenigstens einen zumindest im Wesentlichen in Tangentialrichtung wirksamen zweiten Kontaktbereich (30) aufweist, von denen der erste Kontaktbereich (29) mit dem Anschlag (31) und der zweite Kontaktbereich (30) mit dem Anschlagaufnehmer (35) in Wirkverbindung versetzbar ist, **dadurch gekennzeichnet,**
**dass** sich der wenigstens eine Anschlag (31) sowie der wenigstens eine Anschlagaufnehmer (35) zumindest teilweise radial innerhalb der zumindest einen Tilgermasse (7) erstreckt, wobei
der Anschlag (31) in Zuordnung zum jeweiligen Anschlagaufnehmer (35) mit wenigstens einer Halterung (34) versehen ist, welche den Anschlagaufnehmer (35) umschließt, wobei
die wenigstens eine Halterung (34) des Anschlags (31) gegenüber dem zugeordneten Anschlagaufnehmer (35) zur Bildung eines Freiraums (48) mit einem Achsversatz (50) ausgebildet ist.

2. Torsionsschwingungsdämpfer nach Anspruch 1, **dadurch gekennzeichnet, dass** der erste Kontaktbereich (29) der geometrischen Anformung (28) - in Umfangsrichtung gesehen - zwischen zwei sich umfangsendseitig anschließenden zweiten Kontaktbereichen (30) der geometrischen Anformung (28) vorgesehen ist.

3. Torsionsschwingungsdämpfer nach Anspruch 1 oder 2, **dadurch gekennzeichnet, dass** der erste Kontaktbereich (29) der geometrischen Anformung (28) zur Auslegung auf einander entgegengesetzte Wirkrichtungen der zumindest einen Tilgermasse (7) zweiteilig ausgebildet ist, wobei jede Anformungshälfte (44) bezüglich ihrer Gestaltung an die Gestaltung des entsprechenden Anschlagprofils (40) des zugeordneten Anschlags (31) angepasst ist.

4. Torsionsschwingungsdämpfer nach Anspruch 3, **dadurch gekennzeichnet, dass** jede Anformungshälfte (44) des ersten Kontaktbereichs (29) an ihrer dem Anschlagprofil (40) des Anschlags (31) zugewandten Seite über einen Krümmungsverlauf verfügt, der an einen Krümmungsverlauf des Anschlagprofils (40) des Anschlags (31) angepasst ist.

5. Torsionsschwingungsdämpfer nach Anspruch 1 oder 2, **dadurch gekennzeichnet, dass** die geometrischen Anformung (28) zur Auslegung auf einander entgegengesetzte Wirkrichtungen der zumindest einen Tilgermasse (7) mit zwei zweiten Kontaktbereichen (30) ausgebildet ist, von denen jeder bezüglich seiner Gestaltung an die Gestaltung des entsprechenden Anschlagaufnehmers (35) angepasst ist.

6. Torsionsschwingungsdämpfer nach Anspruch 5, **dadurch gekennzeichnet, dass** jeder zweite Kontaktbereich (29) an seiner dem entsprechenden Anschlagaufnehmer (35) zugewandten Seite über einen Krümmungsverlauf verfügt, der an einen Krümmungsverlauf dieses Anschlagaufnehmers (35) angepasst ist.

7. Torsionsschwingungsdämpfer nach Anspruch 1, **dadurch gekennzeichnet, dass** zur Bildung einer Mehrzahl von Anschlägen (31) für eine Mehrzahl von Tilgermassen (7) die Anschläge (31) in Umfangsrichtung auf einem gemeinsamen, bevorzugt zumindest im Wesentlichen ringförmigen Bauteil (32) aufgenommen sind.

8. Torsionsschwingungsdämpfer nach Anspruch 1, **dadurch gekennzeichnet, dass** der wenigstens eine Anschlagaufnehmer (35) für die Anschläge (31) durch zumindest einen Haltevorsprung (79; 82) gebildet ist, der nach Durchgriff durch eine zugeordnete Ausnehmung (80) oder durch Eingriff in eine zugeordnete Ausnehmung (83) eines Bauteils (62; 70) einer Kopplungsanordnung (56) durch dieses Bauteil (62; 70) fest gehalten ist.

9. Torsionsschwingungsdämpfer nach Anspruch 1, **dadurch gekennzeichnet, dass** der zumindest eine Anschlag (31) für die Tilgermasse (7) in Umfangsrichtung relativ zur Tilgermasse (7) verlagerbar ist.

10. Torsionsschwingungsdämpfer nach Anspruch 9, **dadurch gekennzeichnet, dass** dem zumindest einen Anschlag (31) für die Tilgermasse (7) wenigstens ein Anschlagaufnehmer (35) zugeordnet ist, der eine Zentrierung des Anschlags (31) gegenüber der Zentralachse (15) bewirkt.

11. Torsionsschwingungsdämpfer nach Anspruch 10, **dadurch gekennzeichnet, dass** dem zumindest einen Anschlagaufnehmer (35) eine Umhüllung (90) zugeordnet ist.

12. Torsionsschwingungsdämpfer nach Anspruch 1, **dadurch gekennzeichnet, dass** der Anschlag (31) sich mit seiner radialen Innenseite an einem Bauteil (62) der Kopplungsanordnung (56) abstützt.

13. Torsionsschwingungsdämpfer nach Anspruch 1, bei welchem der Tilgermassenträger (3), bezogen auf jede Tilgermasse (7), über zwei erste Führungsbahnen (13) verfügt, die mit zwei zweiten Führungsbahnen (22) der jeweiligen Tilgermasse (7) zusammen wirken, wobei Rollkörper (20) zur relativ bewegbaren Aufnahme der Tilgermassen (7) am Tilgermassenträger (3) die ersten Führungsbahnen (13) und die zweiten Führungsbahnen (22) miteinander verbinden, **dadurch gekennzeichnet, dass** die zweiten Führungsbahnen (22) im radial äußeren Bereich und/oder die Führungsbahnen (13) im radial inneren Bereich über eine Planausformung (87;107) oder über eine Aufweitung (88; 108) verfügen, so dass die radiale Erstreckung der jeweiligen Führungsbahn (22) im Umfangsbereich des jeweiligen Ausgangsbereichs (24), also im Bereich des geringsten radialen Abstandes zur Zentralachse (15), ein Maximum annimmt.

14. Torsionsschwingungsdämpfer nach Anspruch 1, **dadurch gekennzeichnet, dass** die Anschläge (31) für die Tilgermassen (7) am Tilgermassenträger (3), an einem Bauteil (74) einer Dämpfungseinrichtung (70) der Kopplungsanordnung (56) oder an einem Bauteil 62 der Kopplungsanordnung (56) befestigt oder zumindest zentriert sind.

15. Torsionsschwingungsdämpfer nach Anspruch 1 mit einer zur Aufnahme desselben vorgesehenen Kopplungsanordnung (56), **dadurch gekennzeichnet, dass** die Kopplungsanordnung (56) über eine Torsionsschwingungs-Dämpfereinheit (75) verfügt, bei welcher die wenigstens einen Umfangsfedersatz (68, 69) aufweisende Dämpfungseinrichtung (70) einen Torsionsdämpfereingang (67) und einen Torsionsdämpferausgang (72) aufweist, wobei der Torsionsdämpfereingang (67), der Torsionsdämpferausgang (72) oder ein zwischen Torsionsdämpfereingang (67) und Torsionsdämpferausgang (72) befindliches Torsionsdämpfer-Zwischenbauteil (74) zur drehfesten Aufnahme zumindest eines Tilgermassen-Trägerelementes (5) des Tilgermassenträgers (3) vorgesehen ist.

16. Torsionsschwingungsdämpfer nach Anspruch 15, **dadurch gekennzeichnet, dass** die Torsionsschwingungs-Dämpfereinheit (75) mit einer Kupplungsvorrichtung (64) zusammen wirkt.

## Claims

1. A torsional vibration damper (1) with a damper mass carrier (3), at which at least one damper mass (7) movable relative thereto is received, as well as with at least one stop (31), wherein the at least one damper mass (7) has a stop side (42) with a geometric shaping (28), wherein at least one stop (31) is respectively associated with the at least one damper mass (7), which has an at least partial axial overlay with the at least one damper mass (7) in the extension direction of a central axis (15) and which has a stop profile (40) at its side facing the stop side (42) of the damper mass (7), wherein at least one stop receiver (35) is associated with the at least one stop (31) for the at least one damper mass (7), wherein the geometric shaping (28) intended at the at least one damper mass (7) has both at least one first contact region (29) operative at least substantially in the radial direction and at least one second contact region (30) operative at least substantially in the tangential direction, wherein the first contact region (29) may be brought into operative connection with the stop (31) and the second contact region (30) may be brought into operative connection with the stop receiver (35), **characterized in that**
the at least one stop (31) as well as the at least one stop receiver (35) extend at least partially radially within the at least one damper mass (7), wherein
the stop (31) in association with the respective stop receiver (35) is provided with at least one fixture (34) that encloses the stop receiver (35), wherein
the at least one fixture (34) of the stop (31) is configured with an axial offset (50) with respect to the associated stop receiver (35) to form a free space (48) .

2. The torsional vibration damper of claim 1, **characterized in that** the first contact region (29) of the geometric shaping (28) - viewed in circumferential direction - is intended between two second contact regions (30) of the geometric shaping (28) adjoining at the circumferential end side.

3. The torsional vibration damper of claim 1 or 2, **characterized in that** the first contact region (29) of the geometric shaping (28) is configured in two parts for a design for opposite effective directions of the at least one damper mass (7), wherein each shaping half (44) is adapted, with respect to its design, to the design of the corresponding stop profile (40) of the associated stop (31).

4. The torsional vibration damper of claim 3, **characterized in that** each forming half (44) of the first contact region (29) has, at its side facing the stop profile (40) of the stop (31), a curvature course adapted to a curvature course of the stop profile (40) of the stop (31).

5. The torsional vibration damper of claim 1 or 2, **characterized in that** the geometric shaping (28) is configured, for a design for opposite effective directions of the at least one damper mass (7), with two second contact regions (30), each of which is adapted, with respect to its design, to the design of the corresponding stop receiver (35).

6. The torsional vibration damper of claim 5, **characterized in that** each second contact region (29) has, at its side facing the corresponding stop receiver (35), a curvature course which is adapted to a curvature course of this stop receiver (35).

7. The torsional vibration damper of claim 1, **characterized in that** for forming a plurality of stops (31) for a plurality of damper masses (7), the stops (31) are received in circumferential direction on a common, preferably at least substantially ring-shaped component (32).

8. The torsional vibration damper of claim 1, **characterized in that** the at least one stop receiver (35) for the stops (31) is formed by at least one retaining projection (79; 82) which, after passing through an associated recess (80) or by engagement in an associated recess (83) of a component (62; 70) of a coupling assembly (56), is fixedly held by this component (62; 70).

9. The torsional vibration damper of claim 1, **characterized in that** the at least one stop (31) for the damper mass (7) is displaceable in circumferential direction relative to the damper mass (7).

10. The torsional vibration damper of claim 9, **characterized in that** at least one stop receiver (35) is associated with the at least one stop (31) for the damper mass (7), which causes a centering of the stop (31) with respect to the central axis (15).

11. The torsional vibration damper of claim 10, **characterized in that** an enclosure (90) is associated with the at least one stop receiver (35).

12. The torsional vibration damper of claim 1, **characterized in that** the stop (31) is supported with its radially inner side at a component (62) of the coupling assembly (56).

13. The torsional vibration damper of claim 1, wherein the damper mass carrier (3) has, with respect to each damper mass (7), two first guideways (13) which cooperate with two second guideways (22) of the respective damper mass (7), wherein rolling bodies (20) for the relatively movable reception of the damper masses (7) on the damper mass carrier (3) connect the first guideways (13) and the second guideways (22) to one another, **characterized in that** the second guideways (22) in the radially outer region and/or the guideways (13) in the radially inner region have a planar formation (87;107) or a widening (88; 108), so that the radial extension of the respective guideway (22) assumes a maximum in the circumferential region of the respective initial region (24), i.e. in the region of the smallest radial distance from the central axis (15).

14. The torsional vibration damper of claim 1, **characterized in that** the stops (31) for the damper masses (7) are mounted or at least centered to the damper mass carrier (3), to a component (74) of a damping device (70) of the coupling assembly (56) or to a component 62 of the coupling assembly (56).

15. The torsional vibration damper according to claim 1 with a coupling assembly (56) intended for receiving the same, **characterized in that** the coupling assembly (56) has a torsional vibration damper unit (75), wherein the damping device (70) having at least one circumferential spring assembly (68, 69) has a torsional damper input (67) and a torsional damper output (72), wherein the torsional damper input (67), the torsional damper output (72) or a torsional damper intermediate component (74) located between the torsional damper input (67) and the torsional damper output (72) is intended for receiving, in a rotationally fixed manner, at least one damper mass carrier element (5) of the damper mass carrier (3).

16. The torsional vibration damper of claim 15, **characterized in that** the torsional vibration damper unit (75) cooperates with a coupling device (64).

## Revendications

1. Amortisseur de vibrations de torsion (1) avec un support de masse d'amortissement (3), sur lequel est reçue au moins une masse d'amortissement (7) mobile par rapport à celui-ci, et avec au moins une butée (31), dans lequel l'au moins une masse d'amortissement (7) présente un côté de butée (42) avec une formation géométrique (28), dans lequel à l'au moins une masse d'amortissement (7) est respectivement associée au moins une butée (31) qui présente un recouvrement axial au moins partiel avec l'au moins une masse d'amortissement (7) dans la direction d'extension d'un axe central (15), et qui présente un profil de butée (40) sur son côté faisant face au côté de butée (42) de la masse d'amortissement (7), dans lequel à l'au moins une butée (31) pour l'au moins une masse d'amortissement (7) est associé au moins un capteur de butée (35), la formation géométrique (28) prévue sur l'au moins une masse d'amortissement (7) présentant à la fois au moins une première zone de contact (29) étant opérationnelle au moins essentiellement dans la direction radiale et au moins une deuxième zone de contact (30) étant opérationnelle au moins essentiellement dans la direction tangentielle, la première zone de contact (29) pouvant être mise en liaison fonctionnelle avec la butée (31) et la deuxième zone de contact (30) pouvant être mise en liaison fonctionnelle avec le capteur de butée (35), **caractérisé en ce que**
l'au moins une butée (31) et l'au moins un capteur de butée (35) s'étendent au moins partiellement radialement dans l'au moins une masse d'amortissement (7),
la butée (31) en association avec le respectif capteur de butée (35) étant muni d'au moins une fixation (34) entourant le capteur de butée (35),
l'au moins une fixation (34) de la butée (31) étant configurée avec un décalage axial (50) par rapport au capteur de butée (35) associé pour former un espace libre (48).

2. Amortisseur de vibrations de torsion selon la revendication 1, **caractérisé en ce que** la première zone de contact (29) de la formation géométrique (28) - vue dans la direction circonférentielle - est prévue entre deux secondes zones de contact (30) de la formation géométrique (28) adjacentes à l'extrémité circonférentielle.

3. Amortisseur de vibrations de torsion selon la revendication 1 ou 2, **caractérisé en ce que** la première zone de contact (29) de la formation géométrique (28) est configurée en deux parties pour une conception sur des directions d'action opposées l'une à l'autre de l'au moins une masse d'amortissement (7), chaque moitié de formation (44) étant adaptée, en ce qui concerne sa conception, à la conception du profil de butée (40) correspondant de la butée (31) associée.

4. Amortisseur de vibrations de torsion selon la revendication 3, **caractérisé en ce que** chaque moitié de formation (44) de la première zone de contact (29) présente, sur son côté faisant face au profil de butée (40) de la butée (31), une courbure adaptée à une courbure du profil de butée (40) de la butée (31).

5. Amortisseur de vibrations de torsion selon la revendication 1 ou 2, **caractérisé en ce que** la formation géométrique (28) est configuré, pour une conception sur des directions d'action opposées l'une à l'autre de l'au moins une masse d'amortissement (7), avec deux secondes zones de contact (30) dont chacune est adaptée, en ce qui concerne sa conception, à la conception du capteur de butée (35) correspondant.

6. Amortisseur de vibrations de torsion selon la revendication 5, **caractérisé en ce que** chaque deuxième zone de contact (29) présente, sur son côté faisant face au capteur de butée (35) correspondant, une courbure adaptée à une courbure de ce capteur de butée (35).

7. Amortisseur de vibrations de torsion selon la revendication 1, **caractérisé en ce que**, pour former une pluralité de butées (31) pour une pluralité de masses d'amortissement (7), les butées (31) sont reçues dans la direction circonférentielle sur un composant (32) commun, de préférence au moins essentiellement annulaire.

8. Amortisseur de vibrations de torsion selon la revendication 1, **caractérisé en ce que** l'au moins un capteur de butée (35) pour les butées (31) est formé par au moins une saillie de retenue (79 ; 82) qui, après un passage à travers un évidement (80) associé ou en s'engageant dans un évidement (83) associé d'un composant (62 ; 70) d'un arrangement d'accouplement (56), est fermement maintenu par ce composant (62 ; 70).

9. Amortisseur de vibrations de torsion selon la revendication 1, **caractérisé en ce que** l'au moins une butée (31) pour la masse d'amortissement (7) est déplaçable dans la direction circonférentielle par rapport à la masse d'amortissement (7).

10. Amortisseur de vibrations de torsion selon la revendication 9, **caractérisé en ce qu'**à l'au moins une butée (31) pour la masse d'amortissement (7) est associé au moins un capteur de butée (35) effectuant un centrage de la butée (31) par rapport à l'axe central (15).

11. Amortisseur de vibrations de torsion selon la revendication 10, **caractérisé en ce qu'**une enveloppe (90) est associée à l'au moins un capteur de butée (35).

12. Amortisseur de vibrations de torsion selon la revendication 1, **caractérisé en ce que** la butée (31) s'appuie avec son côté intérieur radial sur un composant (62) de l'arrangement d'accouplement (56).

13. Amortisseur de vibrations de torsion selon la revendication 1, dans lequel le support de masse d'amortissement (3) présente, par rapport à chaque masse d'amortissement (7), deux premières glissières de guidage (13) qui coopèrent avec deux secondes glissières de guidage (22) de la respective masse d'amortissement (7), des corps de roulement (20) pour la réception relativement mobile des masses d'amortissement (7) sur le support de masse d'amortissement (3) reliant les premières glissières de guidage (13) et les deuxièmes glissières de guidage (22), **caractérisé en ce que** les secondes glissières de guidage (22) dans la zone radialement extérieure et/ou les glissières de guidage (13) dans la zone radialement intérieure présentent une formation plane (87 ;107) ou un élargissement (88 ; 108), de sorte que l'extension radiale de la respective glissière de guidage (22) prend un maximum dans la zone circonférentielle de la respective zone initiale (24), c'est-à-dire dans la zone de la plus petite distance radiale de l'axe central (15).

14. Amortisseur de vibrations de torsion selon la revendication 1, **caractérisé en ce que** les butées (31) pour les masses d'amortissement (7) sont fixées ou au moins centrées sur le support de masse d'amortissement (3), sur un composant (74) d'un dispositif d'amortissement (70) de l'arrangement d'accouplement (56) ou sur un composant 62 de l'arrangement d'accouplement (56).

15. Amortisseur de vibrations de torsion selon la revendication 1 avec un arrangement d'accouplement (56) prévu pour recevoir celui-ci, **caractérisé en ce que** l'arrangement d'accouplement (56) présente une unité d'amortisseur de vibrations de torsion (75), dans laquelle le dispositif d'amortissement (70) présentant au moins un ensemble de ressorts circonférentielles (68, 69) présente une entrée d'amortisseur de torsion (67) et une sortie d'amortisseur de torsion (72), l'entrée d'amortisseur de torsion (67), la sortie d'amortisseur de torsion (72) ou un composant intermédiaire (74) de l'amortisseur de torsion situé entre l'entrée d'amortisseur de torsion (67) et la sortie d'amortisseur de torsion (72) est prévu pour la réception solidaire en rotation d'au moins un élément de support de masse d'amortissement (5) du support de masse d'amortissement (3).

16. Amortisseur de vibrations de torsion selon la revendication 15, **caractérisé en ce que** l'unité d'amortisseur de vibrations de torsion (75) coopère avec un dispositif d'accouplement (64).
